# EUROPÄISCHE PATENTANMELDUNG

(11) **EP 2 306 387 A1**
(43) Veröffentlichungstag der Anmeldung: **06.04.2011**
(21) Anmeldenummer: 10174447.2
(22) Anmeldetag: 30.08.2010
(51) Int. Cl.: G06Q 30/00, G06Q 10/00

(54) **Verfahren und Vorrichtung zur Unterstützung einer Teilnahme an einer Auktion für Objekte entlang einer Route**

(30) Priorität: 10.09.2009 DE 102009029330
(71) Anmelder: Robert Bosch GmbH, 70442 Stuttgart (DE)
(72) Erfinder: Duckeck, Ralf, 31137, Hildesheim (DE)

(57) **Zusammenfassung**

Ein Verfahren zur Unterstützung einer Teilnahme an einer Auktion, wobei Informationen über Art und Ort von Objekten sowie Laufzeit der Auktion in einer ersten Datenbank bereitgestellt werden, weist die Verfahrensschritte auf:
a. Eingabe von Startort und Zielort einer Reiseroute;
b. Eingabe einer gewünschten Art von Objekten;
c. Eingabe eines maximalen Abstands von der Reiseroute;
d. Ermittlung der Reiseroute mit dem Startort und dem Zielort nach vorgegebenen Optimierungskriterien;
e. Ermittlung von Orten auf der Reiseroute;
f. Ermittlung von bevorzugten Objekten der gewünschten Art, die in einem Ort mit einem Abstand kleiner als dem maximalen Abstand von einem Ort auf der Reiseroute angeboten werden;
g. Ausgabe der bevorzugten Objekte.

## Beschreibung

### Stand der Technik

Die Erfindung geht aus von einem Verfahren und einer Vorrichtung zur Unterstützung einer Teilnahme an einer Auktion.

Bei Internet-Auktionsplattformen werden heutzutage Artikel aller Art in großen Mengen angeboten. Verfahren und Vorrichtungen zur Unterstützung einer Teilnahme an einer solchen Auktion sind bekannt.

Die US 2006036567 offenbart ein Verfahren und eine Vorrichtung zur Unterstützung einer Teilnahme an einer Auktion. Zur Optimierung wiederholter Suchen nach Auktionen wird eine Datenbank erstellt, mit deren Einträgen in einer Datenbank eines Auktions-Veranstalters nach gewünschten Objekten gesucht wird.

Die US 7,251,628 schlägt ein System und ein Verfahren zur automatischen Abgabe von Geboten vor. In solchen bekannten Verfahren und Vorrichtungen wird automatisch von einem Computer aus eine Datenbank eines Auktions-Veranstalters nach gewünschten Objekten mit bestimmten Merkmalen in den Einträgen in der Datenbank durchsucht.

Häufig besteht ein Interesse, dass ein Artikel persönlich abgeholt wird, z.B. wegen Größe oder Empfindlichkeit der Objekte oder hoher Versandkosten. Auktions-Veranstalter bieten daher in Ihrer Datenbank geografische Informationen über den Ort der angebotenen Objekte an. Dies erfolgt üblicherweise durch den Namen eines Ortes in Verbindung mit dessen Postleitzahl, was eine eindeutige Identifizierung des Ortes ermöglicht. Die genaue Adresse des Objekts beziehungsweise von dessen Verkäufer ist üblicherweise nicht in der Auktions-Datenbank abfragbar. Jedoch ist z.B. bei dem Auktions-Veranstalter Ebay eine Abfrage nach Objekten innerhalb einer gewissen Entfernung von einem gewählten Standort für einige standardisierte Entfernungen möglich. Mit den bekannten Verfahren und Vorrichtungen zur Unterstützung einer Teilnahme an einer Auktion kann ein Bieter nach Auktionen an einem Ort suchen, von dem er weiß, dass sich zu einer gegebenen Zeit dort aufhält. Er kann dann gezielt an Auktionen teilnehmen, deren Objekte er persönlich an solch einem Ort abholen kann.

### Offenbarung der Erfindung

Dagegen hat erfindungsgemäßes Verfahren und eine erfindungsgemäße Vorrichtung zur Unterstützung einer Teilnahme an einer Auktion den Vorteil, dass auch Orte von interessanten Objekten entlang einer vorbestimmten Route automatisch ermittelt werden können. Ein Bieter kann nun vorteilhaft automatisch Auktionen heraussuchen lassen, die an einer Reiseroute liegen, die er in naher Zukunft bereist. Dazu kann er einen gewünschten Abstand von einer Reiseroute angeben, der ihm als Umweg zum Abholen eines ersteigerten Objekts noch lohnend erscheint. Bei weiter von der Route entfernten Objekten ist ein Abholen wegen zu hoher Fahrtkosten nicht mehr lohnenswert.

Das erfindungsgemäße Verfahren zur Unterstützung einer Teilnahme an einer Auktion, wobei Informationen über Art und Ort von Objekten sowie Laufzeit der Auktion in einer ersten Datenbank bereitgestellt werden, weist die Verfahrensschritte auf:
a. Eingabe von Startort und Zielort einer Reiseroute;
b. Eingabe einer gewünschten Art von Objekten;
c. Eingabe eines maximalen Abstands von der Reiseroute;
d. Ermittlung der Reiseroute mit dem Startort und dem Zielort nach vorgegebenen Optimierungskriterien - hier wird eine übliche Navigation eingesetzt;
e. Ermittlung von Orten auf der Reiseroute - vorteilhaft mit einer Point-of-Interest (POI)-Suche und oder einer POI-Umkreissuche entlang der Reiseroute, vorzugsweise mit einem Software-Agent, bevorzugt werden die Postleitzahlen der Orten auf oder entlang der Reiseroute ermittelt;
f. Ermittlung von bevorzugten Objekten der gewünschten Art, die in einem Ort mit einem Abstand kleiner als dem maximalen Abstand von einem Ort auf der Reiseroute angeboten werden - dies kann mit einem Software-Agent beispielsweise bei Ebay mit einer bestehenden Funktion "Auktionen nach Entfernung" erfolgen, vorzugsweise mit den ermittelten Postleitzahlen;
g. Ausgabe der bevorzugten Objekte - die bevorzugten Objekte sind diejenigen gewünschten Objekte, die in einem Abstand kleiner als dem maximalen Abstand von einem Ort auf der Reiseroute angeboten werden. Mit der Ausgabe der bevorzugten Objekte wird der interessierte Bieter auf Objekte hingewiesen, die er selber nicht in angemessener Zeit hätte ermitteln können. Die ausgegebenen Objekte werden vorteilhaft abgespeichert, um sie in einer unten beschriebenen Ausgestaltung verwenden zu können. Diese oben beschriebene erste Ausgestaltung der Erfindung ist geeignet für Personen, die häufig dieselbe Route bereisen, so dass ein bestimmtes Reisedatum nicht berücksichtigt werden braucht. Die Reihenfolge der Verfahrensschritte ist nicht notwendig diejenige der Nummerierung, wie bei den Eingaben offensichtlich ist, jedoch müssen in einem Verfahrensschritt benötigte Daten in vorhergehenden Verfahrenschritten bereitgestellt werden.

Für Reisen mit einem bestimmten Reisedatum weist eine vorteilhafte Ausgestaltung der Erfindung die weiteren Verfahrensschritte auf:
h. Eingabe eines Reisedatums;
i. Ermittlung der bevorzugten Objekte, deren Laufzeit der Auktion vor dem Reisedatum abläuft. Die Verfahrensschritte h. und i. sind an geeigneter Stelle in den Gesamtablauf einzufügen.

Nachdem der interessierte Bieter nun die bevorzugten Objekte kennt kann er an einer oder mehreren Versteigerungen teilnehmen. Falls er in mindestens einer Auktion erfolgreich ist, so steht ihm folgende Ausgestaltung der Erfindung zur Verfügung. Danach weist das Verfahren die weiteren Verfahrensschritte auf, die sich auf die abgespeicherten bevorzugten Objekte beziehen:
j. Bestätigen von bevorzugten Objekten - diejenigen bevorzugten Objekte, für die die Auktion erfolgreich war, werden bestätigt;
k. Erfassen von Adressen der bestätigten Objekte - die genaue Adresse der Orte der Objekte werden erfasst;
I. Berechnen einer Detailroute, welche Start, Ziel, und die Adressen der bestätigten Objekte enthält - dies ist die optimale Reiseroute. Vorzugsweise wird die Detailroute an ein Navigationsgerät übertragen.

Eine erfindungsgemäße Vorrichtung zur Unterstützung einer Teilnahme an einer Auktion weist einen Computer, eine erste Datenbank mit Informationen über Art und Ort von Objekten sowie Laufzeit der Auktion, und eine zweite Datenbank mit Navigationsinformationen auf. Der Computer ist ausgestaltet, Objekte der Auktion zu ermitteln, die in einem vorbestimmten maximalen Abstand von einer ermittelten Reiseroute liegen. Vorteilhaft weist die Vorrichtung ein Navigationsgerät auf und der Computer ist ausgestattet, eine Reiseroute an das Navigationsgerät zu übertragen.

Ausführungsbeispiele der Erfindung werden anhand der Zeichnungen erläutert, in denen
- Fig. 1: eine schematische Darstellung einer Vorrichtung zur Unterstützung einer Teilnahme an einer Auktion gemäß der Erfindung zeigt;
- Fig. 2: ein Flussdiagramm eines erfindungsgemäßen Verfahrens zeigt; und
- Fig. 3: ein Flussdiagramm eines erfindungsgemäßen Verfahrens in einer weiteren Ausfüh- rungsform zeigt.

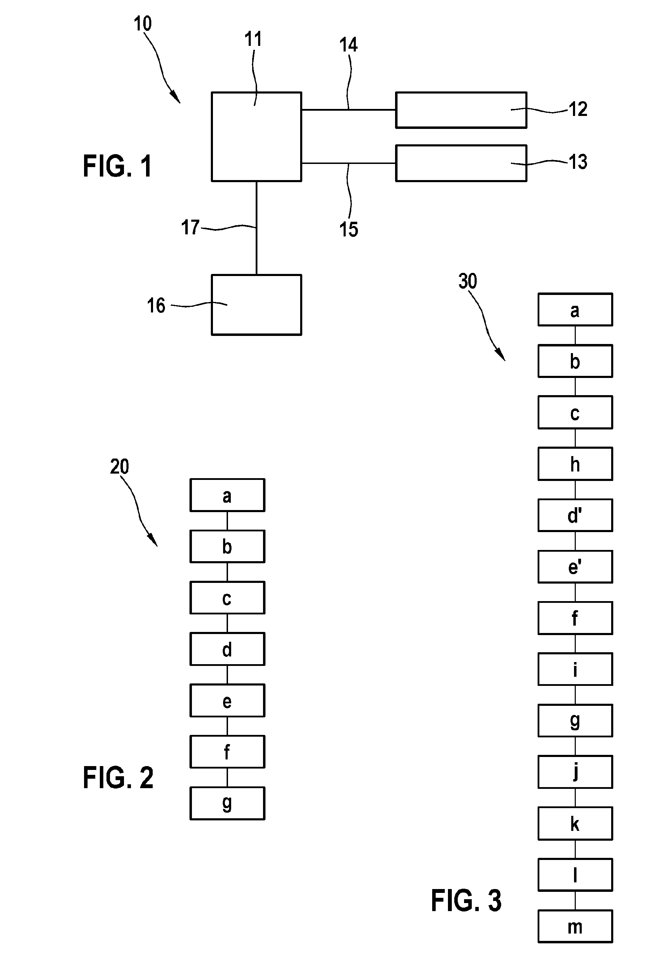

Fig. 1 zeigt eine erfindungsgemäße Vorrichtung 10 zur Unterstützung einer Teilnahme an einer Online-Auktion. Die Vorrichtung 10 weist einen Computer 11, eine Auktions-Datenbank 12 mit Informationen über Art und Ort von Objekten sowie Laufzeit der Auktion, und eine Navigations-Datenbank 13 mit Navigationsinformationen auf. Der Computer 11 ist über eine Internetverbindung 14 mit der Auktions-Datenbank 12 verbunden. Der Computer 11 ist weiterhin über eine Internetverbindung 15 mit der Navigations-Datenbank 13 verbunden. Der Computer 11 ist ausgestaltet, Objekte der Auktion zu ermitteln, die in einem vorbestimmten maximalen Abstand von einer ermittelten Reiseroute liegen. Er kann weiterhin eine Detailroute ermitteln, die Start, Ziel, und die Adressen von bestätigten Objekten enthält - dies ist die optimale Reiseroute.

Die Vorrichtung 10 weist weiterhin ein Navigationsgerät 16 auf und der Computer ist ausgestattet, die optimale Reiseroute über eine USB-Verbindung an das Navigationsgerät zu übertragen.

In Fig. 2 stellt ein Flussdiagramm 20 ein erfindungsgemäßes Verfahren zur Unterstützung einer Teilnahme an einer Auktion dar, wobei Informationen über Art und Ort von Objekten sowie Laufzeit der Auktion in einer Auktions-Datenbank bereitgestellt werden. Das Verfahren weist die Verfahrensschritte auf:
a. Eingabe von Startort und Zielort einer Reiseroute;
b. Eingabe einer gewünschten Art von Objekten, hier bei dem Online-Auktionshaus Ebay;
c. Eingabe eines maximalen Abstands von der Reiseroute;
d. Ermittlung der Reiseroute mit dem Startort und dem Zielort nach vorgegebenen Optimierungskriterien - hier wird eine über das Internet angebundene Navigationsdatenbank eingesetzt;
e. Ermittlung von Orten auf der Reiseroute - hier wird mit einem Software-Agent eine POI-Umkreissuche entlang der Reiseroute eingesetzt, welche die Postleitzahlen der Orte entlang der Reiseroute ermittelt;
f. Ermittlung von bevorzugten Objekten der gewünschten Art, die in einem Ort mit einem Abstand kleiner als dem maximalen Abstand von einem Ort auf der Reiseroute angeboten werden - dies erfolgt hier mit einem Software-Agent bei Ebay mit einer bestehenden Funktion "Auktionen nach Entfernung", mit den ermittelten Postleitzahlen;
g. Ausgabe der bevorzugten Objekte - die bevorzugten Objekte sind diejenigen gewünschten Objekte, die in einem Abstand kleiner als dem maximalen Abstand von einem Ort auf der Reiseroute angeboten werden. Mit der Ausgabe der bevorzugten Objekte wird der interessierte Bieter auf Objekte hingewiesen, die er selber nicht in angemessener Zeit hätte ermitteln können. Diese erste Ausführungsform des Verfahrens gemäß der Erfindung ist geeignet für Personen, die häufig dieselbe Route bereisen, so dass ein bestimmtes Reisedatum nicht berücksichtigt werden braucht.

In Fig. 3 ist in Flussdiagramm 30 eines erfindungsgemäßen Verfahrens in einer weiteren Ausführungsform dargestellt. Verfahrensschritte, die mit denen der in Fig. 2 dargestellten Ausführungsform übereinstimmen haben dieselben Bezugszeichen wie in Fig. 2. und modifizierte Verfahrensschritte haben gestrichene Bezugszeichen. Das Verfahren in Fig. 3 zeigt Abwandlungen der Verfahrensschritte aus Fig. 2 und berücksichtigt nun ein Reisedatum. Außerdem wird nach der Auktion eine optimale Reiseroute zum gewünschten Ziel über die Orte der ersteigerten Objekte berechnet und an ein Navigationsgerät übertragen.

In Fig. 2 stellt ein Flussdiagramm 20 ein erfindungsgemäßes Verfahren zur Unterstützung einer Teilnahme an einer Auktion dar, wobei Informationen über Art und Ort von Objekten sowie Laufzeit der Auktion in einer Auktions-Datenbank bereitgestellt werden. Das Verfahren weist die Verfahrensschritte auf:
a. Eingabe von Startort und Zielort einer Reiseroute;
b. Eingabe einer gewünschten Art von Objekten, hier bei dem Online-Auktionshaus Ebay;
c. Eingabe eines maximalen Abstands von der Reiseroute;
h. Eingabe eines Reisedatums - die Auktionen müssen vor Reiseantritt beendet sein, da die ersteigerten Gegenstände auf der Reise abgeholt werden sollen;
d'. Ermittlung der Reiseroute mit dem Startort und dem Zielort nach vorgegebenen Optimierungskriterien - hier wird eine Navigationsdatenbank und ein Navigationsprogramm auf dem Computer eingesetzt;
e'. Ermittlung von Orten auf der Reiseroute - hier wird mit einem Software-Agent eine POI-Suche in Orten auf der Reiseroute eingesetzt, welche die Postleitzahlen der Orte entlang der Reiseroute ermittelt;
f. Ermittlung von bevorzugten Objekten der gewünschten Art, die in einem Ort mit einem Abstand kleiner als dem maximalen Abstand von einem Ort auf der Reiseroute angeboten werden - dies erfolgt wieder mit einem Software-Agent bei Ebay mit einer bestehenden Funktion "Auktionen nach Entfernung", mit den ermittelten Postleitzahlen;
i. Ermittlung der bevorzugten Objekte, deren Laufzeit der Auktion vor dem Reisedatum abläuft - dieser zusätzliche Filter der bevorzugten Objekte kann je nach Implementierung auch vor oder gleichzeitig mit Schritt f erfolgen.
g. Ausgabe der bevorzugten Objekte - die bevorzugten Objekte sind diejenigen gewünschten Objekte, die in einem Abstand kleiner als dem maximalen Abstand von einem Ort auf der Reiseroute angeboten werden. Die bevorzugten Objekte werden auf dem Computer gespeichert.
j. Bestätigen von bevorzugten Objekten - die Schritte j bis m erfolgen nach Ablauf der Auktion, die gespeicherten bevorzugten Objekte werden nach der Auktion wieder aufgerufen und diejenigen Objekte, bei denen die Auktion erfolgreich war, also die ersteigert worden sind, werden bestätigt;
k. Erfassen von Adressen der bestätigten Objekte - die Adressen der ersteigerten Objekte werden eingegeben oder eingelesen;
I. Berechnen einer Detailroute, welche Start, Ziel, und die Adressen der bestätigten Objekte enthält - dies ist die optimale Route zum Ziel über die Orte der ersteigerten Objekte, um diese abzuholen.
m. Übertragen der Detailroute an ein Navigationsgerät - diese Übertragung erfolgt mittels einer USB-Verbindung vom Computer auf ein Navigationsgerät.

## Patentansprüche

1. Verfahren zur Unterstützung einer Teilnahme an einer Auktion, wobei Informationen über Art und Ort von Objekten sowie Laufzeit der Auktion in einer ersten Datenbank bereitgestellt werden, **gekennzeichnet durch** die Verfahrensschritte:
a. Eingabe von Startort und Zielort einer Reiseroute;
b. Eingabe einer gewünschten Art von Objekten;
c. Eingabe eines maximalen Abstands von der Reiseroute;
d. Ermittlung der Reiseroute mit dem Startort und dem Zielort nach vorgegebenen Optimierungskriterien;
e. Ermittlung von Orten auf der Reiseroute;
f. Ermittlung von bevorzugten Objekten der gewünschten Art, die in einem Ort mit einem Abstand kleiner als dem maximalen Abstand von einem Ort auf der Reiseroute angeboten werden;
g. Ausgabe der bevorzugten Objekte.

2. Verfahren nach Anspruch 1, **gekennzeichnet durch** die weiteren Verfahrensschritte h. Eingabe eines Reisedatums;
i. Ermittlung der bevorzugten Objekte, deren Laufzeit der Auktion vor dem Reisedatum abläuft.

3. Verfahren nach Anspruch 1 oder 2, **dadurch gekennzeichnet, dass** die Ermittlung von Orten auf der Reiseroute mittels einer Postleitzahl erfolgt.

4. Verfahren nach einem der Ansprüche 1 bis 3, **dadurch gekennzeichnet, dass** die Ermittlung des Abstands eines Orts von einem Ort auf der Reiseroute mittels einer Postleitzahl erfolgt.

5. Verfahren nach einem der Ansprüche 1 bis 4, **dadurch gekennzeichnet, dass** die Ermittlung der Reiseroute mit einem Navigationsverfahren erfolgt;

6. Verfahren nach einem der Ansprüche 1 bis 5, **gekennzeichnet durch** die weiteren Verfahrensschritte
j. Bestätigen von bevorzugten Objekten;
k. Erfassen von Adressen der bestätigten Objekte;
l.Berechnen einer Detailroute, welche Start, Ziel, und die Adressen der bestätigten Objekte enthält.

7. Verfahren nach Anspruch 6, **dadurch gekennzeichnet, dass** die Detailroute an ein Navigationsgerät übertragen wird.

8. Vorrichtung (10) zur Unterstützung einer Teilnahme an einer Auktion, mit einem Computer (11), einer ersten Datenbank (12) mit Informationen über Art und Ort von Objekten sowie Laufzeit der Auktion, und einer zweiten Datenbank (13) mit Navigationsinformationen, **dadurch gekennzeichnet, dass** der Computer ausgestaltet ist, Objekte der Auktion zu ermitteln, die in einem vorbestimmten maximalen Abstand von einer ermittelten Reiseroute liegen.

9. Vorrichtung nach Anspruch 8, **dadurch gekennzeichnet, dass** das Vorrichtung (10) ein Navigationsgerät (16) aufweist und der Computer (11) ausgestattet ist, eine Reiseroute an das Navigationsgerät zu übertragen.
